# EUROPEAN PATENT SPECIFICATION

(11) **EP 3 705 358 B1**
(45) Date of publication and mention of the grant of the patent: **20.11.2024**
(21) Application number: 18873297.8
(22) Date of filing: 31.01.2018
(51) Int. Cl.: B60L 53/80, B60L 53/35, B60S 5/06

(54) **SUSPENSION-BASED CONNECTION DEVICE, BATTERY REPLACEMENT ROBOT, CONNECTION METHOD, AND RESET METHOD**
AUFHÄNGUNGSBASIERTE VERBINDUNGSVORRICHTUNG, BATTERIEWECHSELROBOTER, VERBINDUNGSVERFAHREN UND RÜCKSETZVERFAHREN
DISPOSITIF DE CONNEXION À SUSPENSION, ROBOT DE REMPLACEMENT DE BATTERIE, PROCÉDÉ DE CONNEXION ET PROCÉDÉ DE RÉINITIALISATION

(30) Priority: 02.11.2017 CN 201711064658
(43) Date of publication of application: 09.09.2020
(73) Proprietor: NIO (Anhui) Holding Co., Ltd., Hefei City, Anhui Province (CN)
(72) Inventor: ZHOU, Xiaohong, Anting, Jiading Shanghai (CN); HAO, Zhanduo, Anting, Jiading Shanghai (CN); CHEN, Jiong, Anting, Jiading Shanghai (CN)
(74) Representative: Vossius & Partner Patentanwälte Rechtsanwälte mbB
(86) International application number: PCT/CN2018/074805
(87) International publication number: WO 2019/085303

(56) References cited:
- CN-A- 103 596 819
- CN-A- 106 926 825
- CN-U- 205 452 693
- CN-U- 206 231 369
- CN-U- 206 254 981
- CN-U- 206 432 475
- JP-A- 2013 169 862
- US-A- 4 227 463
- US-A- 6 098 775
- US-A1- 2016 107 619

## Description

### Technical Field

The invention relates to the field of battery swapping, and in particular to a floating docking device, a battery swap robot, a docking method, and a restoring method.

### Background Art

With the popularization of new energy automobiles, how to effectively provide fast and effective energy supply for automobiles with insufficient energy has become a matter of great concern for car owners and major manufacturers. Taking electric vehicles as an example, the current mainstream electrical energy supply scheme includes a charging scheme and a battery swap scheme. Compared with the charging scheme, the battery swap scheme can complete the swapping of a traction battery in a short time and has no obvious impact on the service life of the traction battery, so it is one of the main development directions of electrical energy supply. The battery swap scheme is generally completed in a battery charging and swapping station. The battery charging and swapping station is internally equipped with a battery compartment for storing a battery and a battery swap platform, and a battery swap robot for carrying a fresh/used traction battery between the battery compartment and the battery swap platform, such as a rail guided vehicle (RGV). The battery swap robot, by reciprocating on a rail previously laid between the battery compartment and the battery swap platform, completes the action of swapping the traction battery for the electric vehicle parked on the battery swap platform.

During battery swapping, the positioning between the battery swap robot and a vehicle with a battery to be swapped is one of the key steps to realize battery swap scheme. The success rate and accuracy of the positioning directly affect the success rate of battery swapping and the reliability and life of the battery. In order to reduce the positioning error and improve the success rate of positioning, in the prior art, the battery swap robot is usually provided with a floating platform capable of lifting, a locating pin is provided on the floating platform, and a locating hole is provided on the corresponding vehicle body or battery. For example, Chinese utility model patent CN 206 231 369 U discloses a floating alignment device which comprises a fixed plate, a floating plate mounted to the fixed plate via bullseyes bearings, and positioning pins fixedly connected to the floating plate. During hoisting, the locating pin, by driving the floating platform to float in a small range, completes matching and insertion with the locating hole, so as to achieve precise positioning between the battery swap robot and the vehicle with a battery to be swapped, and then the battery swap robot can complete the act of removing the used traction battery from the vehicle with a battery to be swapped or mount the fresh traction battery onto the vehicle with a battery to be swapped. Although the above arrangement method improves the success rate of positioning to a certain extent, there are also certain problems in an actual application process. Firstly, the excessively frequent positioning process between the locating pin and the locating hole is likely to cause damage to the vehicle body or the traction battery. Secondly, the positioning process when a used battery is detached and a fresh battery is mounted during battery swapping is repeated, and this repeated positioning will also lead to a low battery swap efficiency. US 2016/0107619 Aldiscloses a battery pack lift system with air bearings configured to allow relative movement between a battery pack and the frame and additional air bearings configured to allow relative movement between the frame and the lift. The deactivation of the additional air bearings preserves an alignment between the nutrunners on the frame and the vehicle, so that the nutrunners do not need to be realigned to the vehicle when attaching the new battery pack.

Accordingly, there is a need in the art for a new floating docking device to solve the above-mentioned problems.

### Summary of the Invention

In order to solve the above-mentioned problems in the prior art, i.e., in order to solve the problem of being likely to cause damage to a vehicle body or a traction battery due to frequent positioning and the problem of a low battery swap efficiency during battery swapping, the invention is as defined in independent claims 1, 10 and 11, respectively. Further embodiments are disclosed in the dependent claims

In a preferred technical solution of the floating docking device, each of the jacking mechanisms comprises an air cylinder and a friction block, the base is provided with a through hole, the air cylinder is fixedly connected to the base, and a piston of the air cylinder passes through the through hole and is connected to the friction block.

In a preferred technical solution of the floating docking device, each of the floating plates is configured with a plurality of first limiting members, and the first limiting member is arranged to allow the floating plate to float in a horizontal plane.

In a preferred technical solution of the floating docking device, the first limiting member is a bullseye bearing provided on the base, and the floating plate abuts against the bullseye bearing.

In a preferred technical solution of the floating docking device, each of the floating plates is further configured with at least one second limiting member, and the second limiting member is arranged such that the floating plate is unable to move relative to the base in a vertical direction.

In a preferred technical solution of the floating docking device, each of the floating plates is provided with a plurality of support members, and each of the floating plates is connected to the floating platform via the plurality of support members.

In a preferred technical solution of the floating docking device, each of the floating plates further comprises a plurality of restoring members, and the restoring member is connected to the floating plate for adjusting the position of the floating plate.

In a preferred technical solution of the floating docking device, the restoring member comprises a spring, the spring is provided between the base and the floating plate, and the spring is arranged to enable the floating plate to return to a position determined by a pretightening force of the spring.

In a preferred technical solution of the floating docking device, the floating platform is provided with at least one locking/unlocking mechanism, and the locking/unlocking mechanism is arranged such that a traction battery is able to be locked/unlocked.

The invention also provides a battery swap robot, which comprises a body provided with a walking device and a floating docking device, wherein the floating docking device is the floating docking device according to any one of the above solutions.

The invention also provides a docking method for the floating docking device according to any one of the above solutions, the docking method comprising:
docking the positioning member with the engagement member; and
fixing the floating portion relative to the base after the positioning member docks with the engagement member.

The invention also provides a restoring method for the floating docking device according to any one of the above solutions, the restoring method comprising:
disengaging the positioning member from the engagement member; and
restoring the floating portion upon, before or after the positioning member is disengaged from the engagement member.

It will be understood by those skilled in the art that in the preferred technical solutions of the invention, the floating docking device comprises a base, a floating portion, and a position-holding portion. The floating portion is floatable relative to the base and is provided with at least one positioning member, and the positioning member is able to complete docking with an engagement member of a vehicle with a battery to be swapped by means of floating of the floating portion. The position-holding portion enables the floating portion to be fixed relative to the base. With the arrangement of the position-holding portion, the invention enables the floating portion to be fixed relative to the base after the first docking between the positioning member and the engagement member, i.e., after the floating docking device completes positioning with the vehicle with a battery to be swapped when a used battery is unloaded, and then when a fresh battery is mounted to the vehicle with a battery to be swapped, it can be directly mounted without repositioning, which reduces the damage to a vehicle body or a traction battery due to frequent positioning, and improves the service life and battery swap efficiency of the floating docking device.

Specifically, the floating portion comprises a floating platform and a plurality of floating plates, wherein the floating platform is connected to the floating plate, and the floating platform is provided with a plurality of positioning members; and each floating plate floats in a horizontal plane under the restriction of a plurality of first limiting members, and there is no relative movement between the floating plate and the base in a vertical direction under the restriction of at least one second limiting member. The position-holding portion comprises a plurality of jacking mechanisms, and each jacking mechanism comprises an air cylinder and a friction block connected to a piston end of the air cylinder. After the positioning member docks with the vehicle with a battery to be swapped by means of floating of the floating platform, the air cylinder jacks up the friction block such that the friction block and the floating plate are tightly pressed against each other to generate a frictional force, which frictional force causes the floating plate not to float horizontally relative to the base, thus under the combined action of the second limiting member and the frictional force, the floating plate and the floating platform fixedly connected to the floating plate remain fixed in position. Therefore, the invention can reduce the number of positionings during battery swapping, and improve the battery swap efficiency.

### Brief Description of the Drawings

A floating docking device, a battery swap robot, a docking method, and a restoring method of the invention are described below with reference to the accompanying drawings and in conjunction with a battery swap robot of a rail guided type. In the figures:
Fig. 1 is a structural schematic diagram of a floating docking device of the invention;
Fig. 2 is a structural schematic diagram of the floating docking device of the invention with a floating platform removed;
Fig. 3 is a schematic front view of the floating docking device of the invention;
Fig. 4 is a partial enlarged view of Fig. 3 at section A;
Fig. 5 is a sectional view taken along line B-B of Fig. 2;
Fig. 6 is a partial enlarged view of Fig. 2 at section C;
Fig. 7 is a partial enlarged view of Fig. 3 at section D;
Fig. 8 is a structural schematic diagram of a battery swap robot of a rail guided type of the invention;
Fig. 9 is a flow chart of a docking method for the floating docking device of the invention; and
Fig. 10 is a flow chart of a restoring method for the floating docking device of the invention.

### List of reference numerals:

1. Floating docking device; 11. Base; 111. Cylindrical bracket; 112. L-shaped bracket; 12. Floating portion; 121. Floating platform; 122. Floating plate; 123. Support member; 124. Positioning member; 125. Locking/unlocking mechanism; 126. First limiting member; 127. Second limiting member; 128. Restoring member; 1281. Spring; 1282. Fastening screw; 13. position-holding portion; 131. Jacking mechanism; 1311. Air cylinder; 1312. Friction block; 2. Body; 3. Walking device; 4. Battery transfer device; 41. Powered roller set; 42. Unpowered roller set; 5. Scissors driving shelf.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although two locating pins are provided on a floating platform, such a numerical relationship is not fixed, those skilled in the art can make amendments according to requirements so as to adapt to specific application scenarios.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

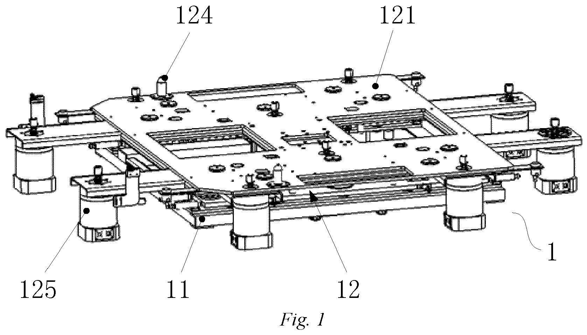

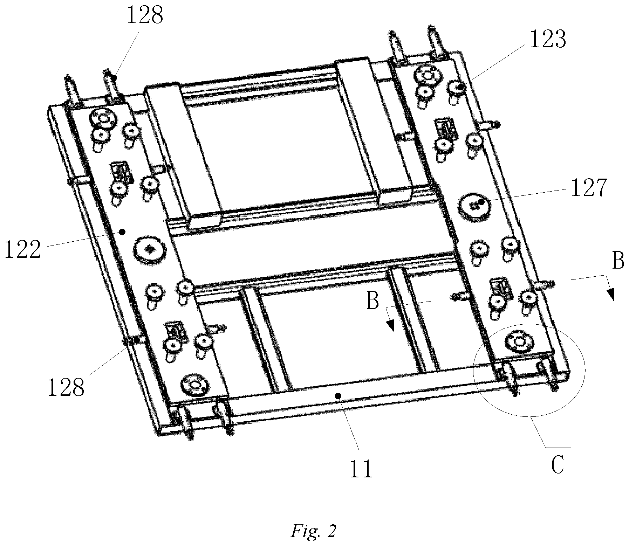

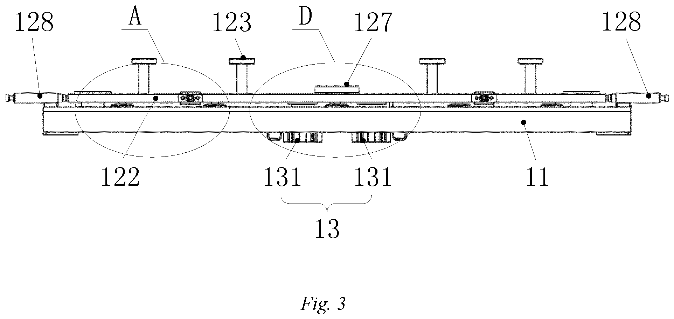

Firstly, referring to Fig. 1, Fig. 2 and Fig. 3, wherein Fig. 1 is a structural schematic diagram of a floating docking device of the invention; Fig. 2 is a structural schematic diagram of the floating docking device of the invention with a floating platform removed; Fig. 3 is a schematic front view of the floating docking device of the invention.

As shown in Fig. 1 to Fig. 3, in order to avoid the problem of being likely to cause damage to a vehicle body or a traction battery due to frequent positioning and the problem of a low battery swap efficiency during battery swapping, a floating docking device 1 of the invention mainly comprises a base 11, a floating portion 12 and a position-holding portion 13. The floating portion 12 is floatable relative to the base 11 in a certain range and is provided with at least one positioning member 124, and the positioning member 124 is able to complete docking with an engagement member of a vehicle with a battery to be swapped by means of floating of the floating portion 12. The position-holding portion 13 is arranged such that the floating portion 12 is fixed relative to the base 11 after the positioning member 124 completes docking with the engagement member. For example, when a used battery is detached, after the positioning member 124 (such as a locating pin) located on the floating portion 12 is inserted with the engagement member (such as a locating hole in an automobile chassis or a traction battery) on the vehicle with a battery to be swapped by means of floating of the floating docking device 1, the position-holding portion 13 keeps the floating portion 12 fixed relative to the base 11 in the current floating state, and then after the locating pin exits the locating hole, the floating portion 12 can still stay in the position of insertion connection. In this way, when a fresh battery is mounted later, the floating docking device 1 can directly complete the insertion of the locating pin and the locating hole and the installation of the fresh battery without repositioning.

That is to say, with the arrangement of the position-holding portion 13, the invention can save the number of positionings between the floating docking device 1 and the vehicle with a battery to be swapped, thus avoiding the damage to a vehicle body or a traction battery due to frequent positioning, and improving the service life and battery swap efficiency of the floating docking device 1.

Referring to Fig. 1 and Fig. 2, specifically, the floating portion 12 comprises a floating platform 121 and a plurality of floating plates 122, and the floating platform 121 is fixedly connected to each floating plate 122 via a plurality of support members 123. The floating platform 121 is fixedly connected to at least one positioning member 124 and at least one locking/unlocking mechanism 125, the positioning member 124 is used to dock with the vehicle with a battery to be swapped, and the locking/unlocking mechanism 125 is used to lock/unlock the traction battery. In combination with Fig. 1 and Fig. 2, in a possible implementation, the floating portion 12 comprises two floating plates 122, the floating platform 121 is connected to each floating plate 122 via eight support members 123, the floating platform 121 is provided with two locating pins (the vehicle with a battery to be swapped is provided with two corresponding locating holes) and ten locking/unlocking mechanisms 125, and the locking/unlocking mechanism 125 can further comprise a servo motor and a locking/unlocking head (such as a hexagonal cylinder) provided on an output shaft of the servo motor.

Obviously, the above-mentioned arrangement method is not unique, and those skilled in the art can adjust it, as long as the modulation enables the floating docking device 1 to successfully complete the conditions of docking with the vehicle with a battery to be swapped and of locking/unlocking the traction battery. For example, the number of floating plates 122 can also be set to be one or four, the positioning member 124 can also be a locating hole (the corresponding automobile chassis or the traction battery is provided with a locating pin), and the floating platform 121 and the floating plate 122 are connected to each other by means of welding or integral molding, etc.

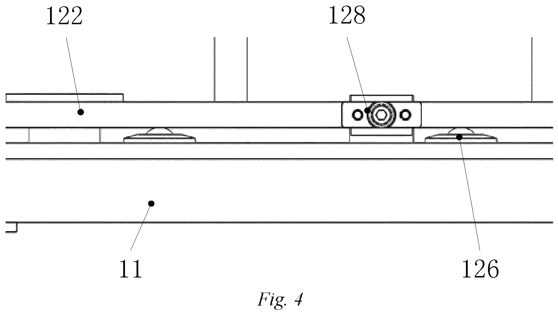

Next, referring to Fig. 2, Fig. 3 and Fig. 4, wherein Fig. 4 is a partial enlarged view of Fig. 3 at section A. As shown in Fig. 2 to Fig. 4, a plurality of first limiting members 126 and at least one second limiting member 127 are provided between each floating plate 122 of the two floating plates 122 and the base 11 to realize floating, wherein the first limiting member 126 is arranged to allow the floating plate 122 to float in a horizontal plane, and the second limiting member 127 is arranged such that the floating plate 122 is unable to move relative to the base 11 in a vertical direction. In combination with Fig. 3 and Fig. 4, preferably, the first limiting member 126 is a bullseye bearing, and a pedestal thereof is fixedly connected to the base 11, a ball faces the floating plate 122, and a bottom face of the floating plate 122 abuts against the bullseye bearing. The second limiting member 127 is a plate bolt, the floating plate 122 is provided with a limiting hole (not shown in the figures, i.e., the aperture of the limiting hole is greater than the diameter of a stud, so that the floating plate 122 can freely float) capable of accommodating a stud of the bolt, the stud is screwed to the base 11 through the limiting hole, and after screwing, a lower side of a nut abuts against a top face of the floating plate 122.

It will be understood by those skilled in the art that the specific form, the arrangement position and the number of the first limiting member 126 and the second limiting member 127 are not fixed, and those skilled in the art can make any arbitrary form of adjustment if the above limiting conditions are satisfied so as to adapt to more specific application scenarios. For example, the first limiting member 126 can also be a member such as a universal wheel that enables the floating plate 122 to float freely, and the pedestal of the first limiting member can also be fixedly connected to the floating plate 122; and the second limiting member 127 can also be a member, such as a rivet, by which the floating plate 122 is unable to move relative to the base 11 in the vertical direction, and can also be an L-shaped steel arranged around the floating plate 122, a vertical portion of the L-shaped steel is fixedly connected to the base 11, and a lateral portion of the L-shaped steel faces the floating plate 122 and abuts against the top face of the floating plate 122 to limit the movement of the floating plate 122 in the vertical direction.

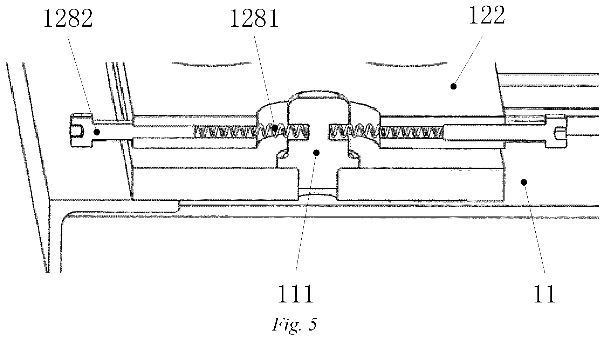

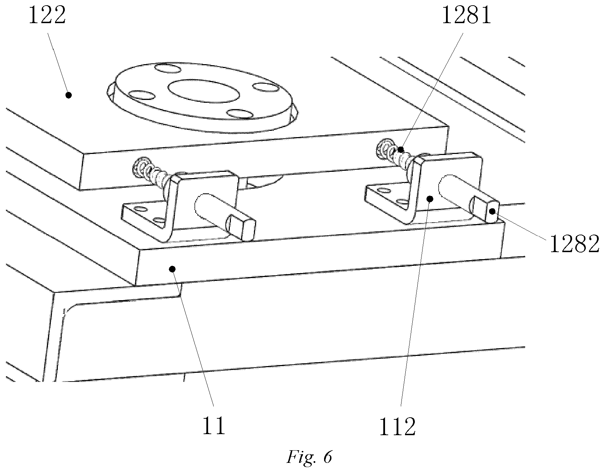

Next, referring to Fig. 2, Fig. 5 and Fig. 6, wherein Fig. 5 is a sectional view taken along line B-B of Fig. 2; and Fig. 6 is a partial enlarged view of Fig. 2 at section C. As shown in Fig. 2, Fig. 5 and Fig. 6, in order to realize automatic restoring of the floating docking device 1, in a possible implementation, each floating plate 122 is further configured with a plurality of restoring members 128 for self-return of the floating plate 122 after floating. Preferably, the restoring member 128 comprises a spring 1281 and a fastening screw 1282, the spring 1281 is provided between the base 11 and the floating plate 122, and the fastening screw 1282 is used to adjust a pretightening force of the spring 1281. In combination with Fig. 2, each floating plate 122 is provided with eight restoring members 128, and two on each side face. In combination with Fig. 5 and Fig. 6, a connecting hole or a counterbore is provided on a side face of the floating plate 122, and a cylindrical bracket 111 and an L-shaped bracket 112 are respectively provided on the base 11 corresponding to the connecting hole and the counterbore. One end of the spring 1281 of part of the restoring members 128 extends into the cylindrical bracket 111 through the connecting hole, and the other end thereof is fastened in the connecting hole through the fastening screw 1282; and one end of the spring 1281 of the other part of the restoring members 128 extends into the counterbore, and the other end thereof is connected to the L-shaped bracket 112 via the fastening screw 1282. In this way, when the positioning member 124 completes insertion with the engagement member by means of floating of the floating plate 122, each spring 1281 may generate an elastic force, and after the insertion connection is cancelled, the floating plate 122 realizes automatic restoring under the action of the elastic force, even if the floating plate 122 returns to the position determined by the pretightening force of the spring 1281.

Of course, the arrangement form and the number of the restoring member 128 described above is only a more specific implementation. In addition, any structure capable of restoring the floating plate 122 should fall within the scope of protection of the invention.

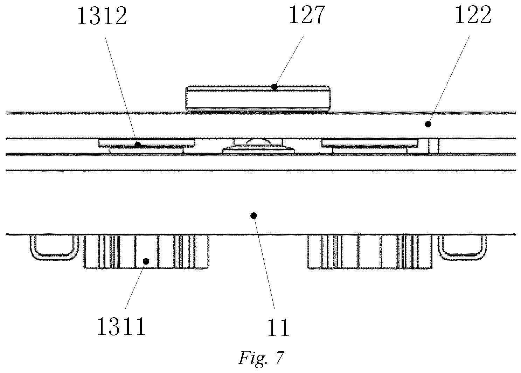

Next, referring to Fig. 3 and Fig. 7, wherein Fig. 7 is a partial enlarged view of Fig. 3 at section D. As shown in Fig. 3 and Fig. 7, the position-holding portion 13 comprises at least one jacking mechanism 131 corresponding to each floating plate 122. Preferably, in this embodiment, two jacking mechanisms 131 are provided, and the jacking mechanism 131 can jack up the floating plate 122, so that the floating plate 122 is fixed relative to the base 11 under the combined restriction of the jacking mechanism 131 and the second limiting member 127. Preferably, each floating plate 122 is correspondingly configured with two jacking mechanisms 131, the jacking mechanism 131 comprises an air cylinder 1311 and a friction block 1312 (such as a metal block with a non-slip texture on a top face), the base 11 is provided with a through hole (not shown in the figures), the air cylinder 1311 is fixedly connected under the base 11, and a piston is connected to the friction block 1312 through the through hole and can push the friction block 1312 up and down.

After the floating plate 122 floats in the horizontal plane, by starting the air cylinder 1311, the piston pushes the friction block 1312 and jacks up same to the bottom face of the floating plate 122, a frictional force is generated between the friction block 1312 and the floating plate 122, and then the floating plate 122 can overcome the elastic force generated by the spring 1281 under the combined action of the restriction of the second limiting member 127 and the frictional force and remain relatively fixed with the base 11, and at the same time, the floating platform 121 fixedly connected to the floating plate 122 also remains relatively fixed with the base 11.

As described above, the position-holding portion 13 is provided such that during battery swapping, the floating docking device 1 only needs to be positioned once with the vehicle with a battery to be swapped, i.e. positioning is carried out when the used battery is detached, and repositioning is not required when the fresh battery is mounted later, which eliminates an accurate positioning process, reduces possible damage to the vehicle body caused by pin hole positioning, and speeds up the beat of battery swapping.

It should be noted that the arrangement position and the number of the above position-holding portion 13 are only used to illustrate the working principle of the invention, and are not intended to limit the scope of protection of the invention. Provided that it does not deviate from the principle of the invention, those skilled in the art can make any arbitrary form of adjustment so as to adapt to more specific application scenarios. For example, the air cylinder 1311 can also be replaced by a hydraulic cylinder, the friction block 1312 can also be replaced by a rubber block, or even the air cylinder 1311 may not be provided with the friction block 1312, and only the jacking force of a piston rod is relied on to realize relative fixation, etc. between the floating plate 122 and the base.

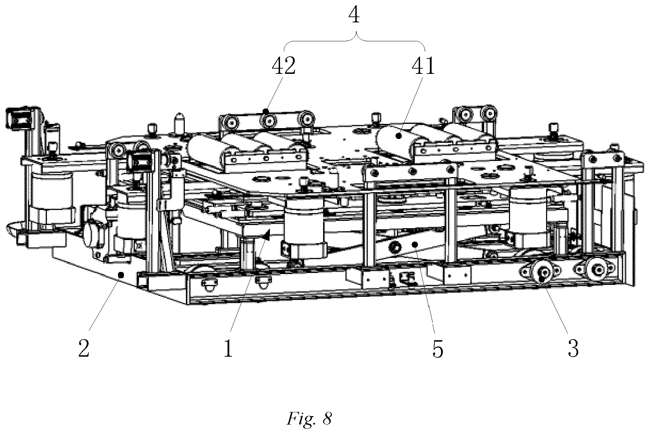

Next, referring to Fig. 8, Fig. 8 is a structural schematic diagram of a battery swap robot of a rail guided type of the invention. As shown in Fig. 8, the invention further provides a battery swap robot of a rail guided type (hereinafter referred to as the battery swap robot), the battery swap robot of a rail guided type mainly comprising a body 2, a walking device 3 provided on the body 2, a floating docking device 1 and a battery transfer device 4. The walking device 3 is a wheel that can roll on a set rail, and the battery transfer device 4 comprises a powered roller set 41 and an unpowered roller set 42, which is used for transferring the traction battery between the battery swap robot and a battery rack within a battery charging and swapping station. The floating docking device 1 is the floating docking device 1 described above in this embodiment, and is fixed to a robot body 2 via a lifting mechanism 5. For example, the lifting mechanism 5 is a scissors driving shelf, and the base 11 of the floating docking device 1 is fixed to the scissors driving shelf. The scissors driving shelf can drive the floating docking device 1 up and down, and then the locating pin located on the floating platform 121 completes the insertion with the locating hole in the vehicle with a battery to be swapped when the floating plate 122 floats relative to the base 11, realizing the positioning of the battery swap robot and the vehicle with a battery to be swapped. At this time, the air cylinder 1311 jacks up the friction block 1312 to realize the aforementioned fixation between the floating plate 122 and the base 11.

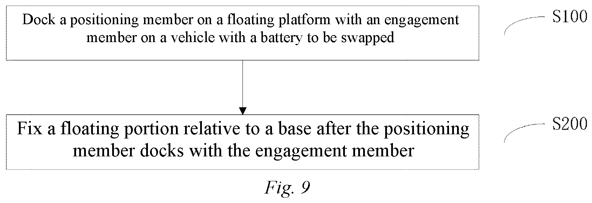

Next, referring to Fig. 9, Fig. 9 is a flow chart of a docking method for the floating docking device of the invention. As shown in Fig. 9, the invention further provides the docking method for the floating docking device 1, the method mainly comprising:

S100. docking the positioning member 124 on the floating platform 121 with the engagement member on the vehicle with a battery to be swapped; and

S200. fixing the floating portion 12 relative to the base 11 after the positioning member 124 docks with the engagement member.

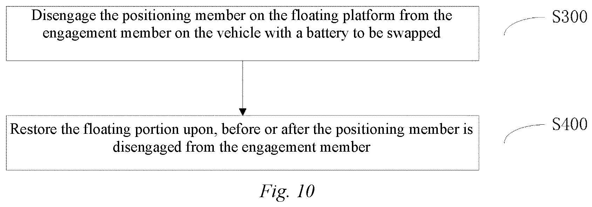

Next, referring to Fig. 10, Fig. 10 is a flow chart of a restoring method for the floating docking device of the invention. As shown in Fig. 10, the invention further provides the restoring method for the floating docking device 1, the method mainly comprising:

S300. disengaging the positioning member 124 on the floating platform 121 from the engagement member on the vehicle with a battery to be swapped; and

S400. restoring the floating portion upon, before or after the positioning member 124 is disengaged from the engagement member.

Referring to Fig. 9 and Fig. 10 and in combination with Fig. 8, as a possible implementation, a one-time battery swap process of the battery swap robot applying the floating docking device 1 of the invention can be:
the vehicle with a battery to be swapped arrives at a parking platform of the battery charging and swapping station and completes coarse positioning and hoisting → the battery swap robot arrives at a projection position of the vehicle with a battery to be swapped and completes accurate positioning of the vehicle with a battery to be swapped in the vertical direction → the scissors driving shelf lifts the floating docking device 1, such that the locating pin matches and is inserted into the locating hole of the used battery → the piston of the air cylinder 1311 jacks up the friction block 1312 to the floating plate 122, so that the floating plate 122 is fixed relative to the base 11 → the locking/unlocking mechanism 125 detaches the used battery → the scissors driving shelf lowers the floating docking device 1 and completes the detachment of the used battery → the battery swap robot leaves a battery swap position and arrives at the battery rack, the battery transfer device 4 is used to replace the used battery with the fresh battery, and the locating pin and locating hole in the refresh battery complete insertion and positioning → the battery swap robot again arrives at the projection position of the vehicle to be swapped and completes accurate positioning of the vehicle with a battery to be swapped → the scissors driving shelf directly jacks up the floating docking device 1, and the locking/unlocking mechanism 125 completes the fastening of the fresh battery → the scissors driving shelf lowers the floating docking device 1, at the same time, the piston of the air cylinder 1311 descends, and the floating plate 122 performs automatic restoring under the elastic force of the restoring member 128 → the battery swap robot returns to an initial position, thus completing battery swapping.

Finally, it should be noted that although this implementation is described in conjunction with a battery swap robot of a rail guided type, the invention can obviously also be applied to other apparatus with the floating docking device 1, such as a battery swap robot of an automatically guided type.

## Claims

1. A floating docking device (1) comprising a base (11), a floating portion (12), and a position-holding portion (13),
wherein the floating portion (12) is floatable relative to the base (11) and is provided with at least one positioning member (124), and the positioning member (124) is able to complete docking with an engagement member of a vehicle with a battery to be swapped by means of floating of the floating portion (12); and
wherein the position-holding portion (13) is arranged to enable the floating portion (12) to be fixed relative to the base (11),
**characterized in that** the floating portion (12) comprises a plurality of floating plates (122) and a floating platform (121) connected to the plurality of the floating plates (122), and the at least one positioning member (124) is arranged on the floating platform (121),
wherein the position-holding portion (13) comprises at least one jacking mechanism (131) corresponding to each of the floating plates (122), and the jacking mechanism (131) is able to be jacked up to the floating plate (122), so that the floating plate (122) is fixed relative to the base (11).

2. The floating docking device (1) according to claim 1, **characterized in that**:
each of the floating plates (122) is configured with at least one second limiting member (127), and the second limiting member (127) is arranged such that the floating plate (122) is unable to move relative to the base (11) in a vertical direction; and
each of the jacking mechanisms (131) comprises an air cylinder (1311) and a friction block (1312), the base (11) is provided with a through hole, the air cylinder (1311) is fixedly connected to the base (11), and a piston of the air cylinder (1311) passes through the through hole and is connected to the friction block (1312), so that the floating plates (122) is able to be fixed relative to the base (11) under the combined restriction of the jacking mechanism (131) and the second limiting member (127).

3. The floating docking device (1) according to claim 1 or claim 2, **characterized in that** each of the floating plates (122) is configured with a plurality of first limiting members (126), and the first limiting member (126) is arranged to allow the floating plate (122) to float in a horizontal plane.

4. The floating docking device (1) according to claim 3, **characterized in that** the first limiting member (126) is a bullseye bearing provided at the base (11), and the floating plate (122) abuts against the bullseye bearing.

5. The floating docking device (1) according to claim 3, **characterized in that** each of the floating plates (122) is provided with a plurality of support members (123), and each of the floating plates (122) is connected to the floating platform (121) via the plurality of support members (123).

6. The floating docking device (1) according to claim 5, **characterized in that** each of the floating plates (122) is further configured with a plurality of restoring members (128), and the restoring member (128) is connected to the floating plate (122) for adjusting the position of the floating plate (122).

7. The floating docking device (1) according to claim 6, **characterized in that** the restoring member (128) comprises a spring (1281), the spring (1281) is provided between the base (11) and the floating plate (122), and the spring (128) is arranged to enable the floating plate (122) to return to a position determined by a pretightening force of the spring (1281).

8. The floating docking device (1) according to claim 1, **characterized in that** the floating platform (121) is provided with at least one locking/unlocking mechanism (125), and the locking/unlocking mechanism (125) is arranged such that a traction battery is able to be locked/unlocked.

9. A battery swap robot, which comprises a body (2) provided with a walking device (3) and a floating docking device (1), **characterized in that** the floating docking device (1) is the floating docking device (1) according to any one of claims 1 to 8.

10. A docking method for the floating docking device (1) according to any one of claims 1 to 8, **characterized in that** the docking method comprises:
docking the positioning member (124) with the engagement member; and
fixing the floating portion (12) relative to the base (11) after the positioning member docks with the engagement member.

11. A restoring method for the floating docking device according to any one of claims 6 to 8, **characterized in that** the restoring method comprises:
disengaging the positioning member from the engagement member; and
restoring the floating portion (12) upon, before or after the positioning member is disengaged from the engagement member.

## Patentansprüche

1. Gleitende Andockstation (1), aufweisend eine Basis (11), einen gleitenden Abschnitt (12) und einen Positionshalteabschnitt (13),
wobei der gleitende Abschnitt (12) im Verhältnis zu der Basis (11) gleitfähig ist und mit mindestens einem Positionierungselement (124) versehen ist und das Positionierungselement (124) in der Lage ist, das Andocken mit einem Eingriffselement eines Fahrzeugs mit einer auszutauschenden Batterie mittels Gleiten-Lassen des gleitenden Abschnitts (12) auszuführen, und
wobei der Positionshalteabschnitt (13) dafür angeordnet ist, das Fixieren des gleitenden Abschnitts (12) im Verhältnis zu der Basis (11) zu ermöglichen,
**dadurch gekennzeichnet, dass** der gleitende Abschnitt (12) mehrere gleitende Platten (122) und eine gleitende Plattform (121), die mit den mehreren der gleitenden Platten (122) verbunden ist, aufweist und das mindestens eine Positionierungselement (124) auf der gleitenden Plattform (121) angeordnet ist,
wobei der Positionshalteabschnitt (13) mindestens einen Hochsetzmechanismus (131) entsprechend jeder der gleitenden Platten (122) aufweist und der Hochsetzmechanismus (131) in der Lage ist, zu der gleitenden Platte (122) hochgesetzt zu werden, so dass die gleitende Platte (122) im Verhältnis zu der Basis (11) fixiert wird.

2. Gleitende Andockstation (1) nach Anspruch 1, **dadurch gekennzeichnet, dass**:
jede der gleitenden Platten (122) mit mindestens einem zweiten Begrenzungselement (127) ausgestaltet ist und das zweite Begrenzungselement (127) derart angeordnet ist, dass die gleitende Platte (122) nicht in der Lage ist, sich im Verhältnis zu der Basis (11) in eine vertikale Richtung zu bewegen, und
jeder der Hochsetzmechanismen (131) einen Luftzylinder (1311) und einen Reibblock (1312) aufweist, die Basis (11) mit einer Durchgangsöffnung versehen ist, der Luftzylinder (1311) fixiert mit der Basis (11) verbunden ist und ein Kolben des Luftzylinders (1311) durch die Durchgangsöffnung verläuft und mit dem Reibblock (1312) verbunden ist, so dass die gleitenden Platten (122) in der Lage sind, unter der kombinierten Einschränkung durch den Hochsetzmechanismus (131) und das zweite Begrenzungselement (127) im Verhältnis zu der Basis (11) fixiert zu werden.

3. Gleitende Andockstation (1) nach Anspruch 1 oder Anspruch 2, **dadurch gekennzeichnet, dass** jede der gleitenden Platten (122) mit mehreren ersten Begrenzungselementen (126) ausgestaltet ist, und das erste Begrenzungselement (126) dafür angeordnet ist, der gleitenden Platte (122) das Gleiten in einer horizontalen Ebene zu gestatten.

4. Gleitende Andockstation (1) nach Anspruch 3, **dadurch gekennzeichnet, dass** das erste Begrenzungselement (126) eine an der Basis (11) bereitgestellte Kugelrolle ist und die gleitende Platte (122) an der Kugelrolle anliegt.

5. Gleitende Andockstation (1) nach Anspruch 3, **dadurch gekennzeichnet, dass** jede der gleitenden Platten (122) mit mehreren Stützelementen (123) versehen ist und jede der gleitenden Platten (122) über die mehreren Stützelemente (123) mit der gleitenden Plattform (121) verbunden ist.

6. Gleitende Andockstation (1) nach Anspruch 5, **dadurch gekennzeichnet, dass** jede der gleitenden Platten (122) ferner mit mehreren Rückstellelementen (128) ausgestaltet ist und das Rückstellelement (128) zum Justieren der Position der gleitenden Platte (122) mit der gleitenden Platte (122) verbunden ist.

7. Gleitende Andockstation (1) nach Anspruch 6, **dadurch gekennzeichnet, dass** das Rückstellelement (128) eine Feder (1281) aufweist, die Feder (1281) zwischen der Basis (11) und der gleitenden Platte (122) bereitgestellt ist und die Feder (128) dafür angeordnet ist, der gleitenden Platte (122) das Zurückkehren zu einer Position zu ermöglichen, die durch eine Vorspannkraft der Feder (1281) bestimmt ist.

8. Gleitende Andockstation (1) nach Anspruch 1, **dadurch gekennzeichnet, dass** die gleitende Plattform (121) mit mindestens einem Arretierungs-/Freigabemechanismus (125) versehen ist und der Arretierungs-/Freigabemechanismus (125) derart angeordnet ist, dass eine Traktionsbatterie in der Lage ist, arretiert/freigegeben zu werden.

9. Batterieumtauschroboter, der einen Körper (2) aufweist, der mit einer Fortbewegungsvorrichtung (3) und einer gleitenden Andockstation (1) versehen ist, **dadurch gekennzeichnet, dass** die gleitende Andockstation (1) die gleitende Andockstation (1) nach einem der Ansprüche 1 bis 8 ist.

10. Andockverfahren für die gleitende Andockstation (1) nach einem der Ansprüche 1 bis 8, **dadurch gekennzeichnet, dass** das Andockverfahren Folgendes umfasst:
Andocken des Positionierungselements (124) an dem Eingriffselement und
Fixieren des gleitenden Abschnitts (12) gegenüber der Basis (11) nach dem Andocken des Positionierungselemente an dem Eingriffselement.

11. Rückstellverfahren für die gleitende Andockstation nach einem der Ansprüche 6 bis 8, **dadurch gekennzeichnet, dass** das Rückstellverfahren Folgendes umfasst:
Lösen des Positionierungselements von dem Eingriffselement und
Rückstellen des gleitenden Abschnitts (12) mit, vor oder nach dem Lösen des Positionierungselements von dem Eingriffselement.

## Revendications

1. Dispositif d'amarrage flottant (1) comprenant une base (11), une partie flottante (12), et une partie de maintien de position (13),
dans lequel la partie flottante (12) peut flotter par rapport à la base (11) et est pourvue d'au moins un organe de positionnement (124), et l'organe de positionnement (124) peut réaliser un amarrage avec un organe de prise d'un véhicule doté d'une batterie à échanger en faisant flotter la partie flottante (12) ; et
dans lequel la partie de maintien de position (13) est agencée pour permettre à la partie flottante (12) d'être fixe par rapport à la base (11),
**caractérisé en ce que** la partie flottante (12) comprend une pluralité de plaques flottantes (122) et une plateforme flottante (121) reliée à la pluralité de plaques flottantes (122), et l'au moins un organe de positionnement (124) est disposé sur la plateforme flottante (121),
dans lequel la partie de maintien de position (13) comprend au moins un mécanisme de levage (131) correspondant à chacune des plaques flottantes (122), et le mécanisme de levage (131) peut être levé jusqu'à la plaque flottante (122), de sorte la plaque flottante (122) est fixe par rapport à la base (11).

2. Dispositif d'amarrage flottant (1) selon la revendication 1, **caractérisé en ce que** :
chacune des plaques flottantes (122) est conçue dotée d'au moins un second organe de limitation (127), et le second organe de limitation (127) est disposé de façon que la plaque flottante (122) ne puisse pas se déplacer par rapport à la base (11) dans une direction verticale ; et
chacun des mécanismes de levage (131) comprend un vérin pneumatique (1311) et un bloc de friction (1312), la base (11) est pourvue d'un trou traversant, le vérin pneumatique (1311) est relié de manière fixe à la base (11), et un piston du vérin pneumatique (1311) passe à travers le trou traversant et est relié au bloc de friction (1312), de sorte que les plaques flottantes (122) peuvent être fixes par rapport à la base (11) sous la restriction combinée du mécanisme de levage (131) et du second organe de limitation (127).

3. Dispositif d'amarrage flottant (1) selon la revendication 1 ou la revendication 2, **caractérisé en ce que** chacune des plaques flottantes (122) est conçue dotée d'une pluralité de premiers organes de limitation (126), et le premier organe de limitation (126) est agencé pour permettre à la plaque flottante (122) de flotter dans un plan horizontal.

4. Dispositif d'amarrage flottant (1) selon la revendication 3, **caractérisé en ce que** le premier organe de limitation (126) est un palier à rouleaux placé à la base (11), et la plaque flottante (122) vient en butée contre le palier à rouleaux.

5. Dispositif d'amarrage flottant (1) selon la revendication 3, **caractérisé en ce que** chacune des plaques flottantes (122) est pourvue d'une pluralité d'organes de support (123), et chacune des plaques flottantes (122) est reliée à la plateforme flottante (121) par le biais de la pluralité d'organes de support (123).

6. Dispositif d'amarrage flottant (1) selon la revendication 5, **caractérisé en ce que** chacune des plaques flottantes (122) est en outre conçue dotée d'une pluralité d'organes de rappel (128), et l'organe de rappel (128) est relié à la plaque flottante (122) pour régler la position de la plaque flottante (122).

7. Dispositif d'amarrage flottant (1) selon la revendication 6, **caractérisé en ce que** l'organe de restauration (128) comprend un ressort (1281), le ressort (1281) est placé entre la base (11) et la plaque flottante (122), et le ressort (128) est disposé pour permettre à la plaque flottante (122) de revenir à une position déterminée par une force de pré-tension du ressort (1281).

8. Dispositif d'amarrage flottant (1) selon la revendication 1, **caractérisé en ce que** la plateforme flottante (121) est pourvue d'au moins un mécanisme de verrouillage/déverrouillage (125), et le mécanisme de verrouillage/déverrouillage (125) est agencé de sorte qu'une batterie de traction peut être verrouillée/déverrouillée.

9. Robot d'échange de batterie, qui comprend un corps (2) pourvu d'un dispositif de déplacement (3) et d'un dispositif d'amarrage flottant (1), **caractérisé en ce que** le dispositif d'amarrage flottant (1) est le dispositif d'amarrage flottant (1) selon l'une quelconque des revendications 1 à 8.

10. Procédé d'amarrage pour le dispositif d'amarrage flottant (1) selon l'une quelconque des revendications 1 à 8, **caractérisé en ce que** le procédé d'amarrage comprend :
l'amarrage de l'organe de positionnement (124) sur l'organe de prise ; et
la fixation de la partie flottante (12) par rapport à la base (11) après que l'organe de positionnement s'amarre sur l'organe de prise.

11. Procédé de remise en état pour le dispositif d'amarrage flottant selon l'une quelconque des revendications 6 à 8, **caractérisé en ce que** le procédé de remise en état comprend :
le dégagement de l'organe de positionnement de l'organe de prise ; et
le repositionnement de la partie flottante (12), lorsque, avant que ou après que l'organe de positionnement est dégagé de l'organe de prise.
